# EUROPÄISCHE PATENTANMELDUNG

(11) **EP 4 194 282 A1**
(43) Veröffentlichungstag der Anmeldung: **14.06.2023**
(21) Anmeldenummer: 22212341.6
(22) Anmeldetag: 08.12.2022
(51) Int. Cl.: B60R 25/20

(54) **VERFAHREN UND SENSORANORDNUNG ZUM ERFASSEN EINER BETÄTIGUNGSHANDLUNG EINES BENUTZERS**

(30) Priorität: 10.12.2021 DE 102021132719
(71) Anmelder: Huf Hülsbeck & Fürst GmbH & Co. KG, 42551 Velbert (DE)
(72) Erfinder: Van Gastel, Peter, 42699 Solingen (DE); Lindic, Iko, 45149 Essen (DE)
(74) Vertreter: Bals & Vogel Patentanwälte PartGmbB

(57) **Zusammenfassung**

Die Erfindung betrifft ein Verfahren zum Erfassen einer Betätigungshandlung eines Benutzers (20) für eine berührungslose Betätigung eines beweglichen Teils (101) eines Kraftfahrzeugs (100), insbesondere einer Klappe oder einer Tür, wie z. B. einer Seitentür, bspw. einer Schiebertür, des Kraftfahrzeugs (100),
durch eine Sensoranordnung (10), mit zumindest einem Sensor (11, 12) zum Erfassen einer Annäherung des Benutzers (20) und/oder eines Körperteils (21) des Benutzers (20) an die Sensoranordnung (10), wobei durch den zumindest einen Sensor (11, 12) mindestens ein Detektionsbereich (B1, B2) gebildet wird, in welchem eine Annäherung an den zumindest einen Sensor (11, 12) erfasst wird,
aufweisend:
- Überwachen eines Signals (s1, s2) des zumindest einen Sensors (11, 12) auf eine charakteristische Signalantwort (S1, S2), die für eine Annäherung an den zumindest einen Sensor (11, 12) spezifisch ist,
- Erfassen einer Annäherung an den zumindest einen Sensor (11, 12), wenn die Signalantwort (S1, S2) des zumindest einen Sensors (11, 12) einen ersten Schwellenwert (w1) erreicht, insbesondere unterschreitet,
- Erfassen einer Betätigungshandlung, wenn die Annäherung an den zumindest einen Sensor (11, 12) für eine bestimmte Betätigungsdauer (dt) erfasst wird, insbesondere wenn die Signalantwort (S1, S2) des zumindest einen Sensors (11, 12) für eine bestimmte Betätigungsdauer (dt) den ersten Schwellenwert (w1) unterschreitet.

## Beschreibung

Die Erfindung betrifft ein Verfahren und eine Sensoranordnung zum Erfassen einer Betätigungshandlung eines Benutzers für eine berührungslose Betätigung eines beweglichen Teils eines Kraftfahrzeugs, insbesondere einer Klappe, bspw. einer Heckklappe, oder einer Tür, bspw. einer Seitentür, z. B. einer Schiebertür, des Kraftfahrzeugs.

Zur berührungslosen Betätigung von beweglichen Teilen eines Kraftfahrzeugs sind Sensoranordnungen bekannt, die eine Annäherung einer Person sensieren, um darin den Wunsch zur Öffnung des beweglichen Teils des Kraftfahrzeugs zu erkennen. Das bewegliche Teil des Kraftfahrzeugs kann eine Klappe und insbesondere eine Heckklappe des Kraftfahrzeugs betreffen. Das bewegliche Teil des Kraftfahrzeugs kann ferner eine Tür, bspw. eine Seitentür und insbesondere eine Schiebetür des Kraftfahrzeugs betreffen. Weiterhin sind auch bewegliche Tankklappen bekannt, die automatisch geöffnet oder geschlossen werden können, wenn eine Betätigungshandlung berührungslos erfasst wurde. Im Folgenden kann das bewegliche Teil vereinfachend als Klappe bezeichnet werden.

Eine Betätigung kann einen Entriegelungs- und/oder Öffnungsvorgang umfassen. Weiterhin kann eine Betätigung einen Schließ- und/oder Verriegelungsvorgang umfassen, beispielsweise wenn der Benutzer einen Gegenstand beidhändig trägt und berührungslos die Klappe betätigen möchte, um bspw. den Kofferraum zu öffnen

Bei bekannten Sensoranordnungen werden zumeist bestimmte Bewegungsabläufe zum Erfassen einer Betätigungshandlung vorausgesetzt, um eine berührungslose Betätigung eines beweglichen Teils einleiten zu können. Beispielsweise kann ein Bewegungsablauf eine Hin- und Zurückbewegung zum beweglichen Teil umfassen, die in bestimmten Zeiträumen durchgeführt werden müssen. Bei unerfahrenen Benutzer können zumeist bestimmte festgelegte Bewegungsabläufe oft nicht wie erforderlich durchgeführt werden. Die Betätigungshandlungen verlaufen daher oft fehlerhaft. Der Benutzerkomfort leidet dadurch. Auch das Vertrauen in das System wird dadurch strapaziert.

Aufgabe der Erfindung ist daher, ein verbessertes Verfahren und ferner eine verbesserte Sensoranordnung zur Verfügung zu stellen, die zum Erfassen einer Betätigungshandlung eines Benutzers für eine berührungslose Betätigung eines beweglichen Teils eines Kraftfahrzeugs, insbesondere einer Klappe, wie z. B. einer Heckklappe, oder einer Tür, wie z. B. einer Seitentür, bspw. einer Schiebertür, des Kraftfahrzeugs auf eine vorteilhafte Weise ausgelegt sind. Insbesondere ist Aufgabe der Erfindung, ein verbessertes Verfahren Erfassen einer Betätigungshandlung eines Benutzers für eine berührungslose Betätigung eines beweglichen Teils eines Kraftfahrzeugs bereitzustellen, welches eine intuitive, einfache, schnelle, sichere und zuverlässige Betätigung des beweglichen Teils ermöglicht.

Die erfindungsgemäße Aufgabe wird gelöst durch: ein Verfahren zum Erfassen einer Betätigungshandlung eines Benutzers für eine berührungslose Betätigung eines beweglichen Teils eines Kraftfahrzeugs, insbesondere einer Klappe, wie z. B. einer Heckklappe, oder einer Tür, wie z. B. einer Seitentür, bspw. einer Schiebertür, des Kraftfahrzeugs, mit den Merkmalen des unabhängigen Verfahrensanspruches. Ferner wir die erfindungsgemäße Aufgabe gelöst durch: eine Sensoranordnung zum Erfassen einer Betätigungshandlung eines Benutzers für eine berührungslose Betätigung eines beweglichen Teils eines Kraftfahrzeugs, insbesondere einer Klappe, wie z. B. einer Heckklappe, oder einer Tür, wie z. B. einer Seitentür, bspw. einer Schiebertür, des Kraftfahrzeugs, mit den Merkmalen des unabhängigen Vorrichtungsanspruches. Vorteilhafte Weiterbildungen der Erfindung sind in den abhängigen Ansprüchen angegeben. Dabei gelten Merkmale und Details, die im Zusammenhang mit den unterschiedlichen Ausführungsformen und/oder Aspekten der Erfindung beschrieben sind, selbstverständlich auch im Zusammenhang mit den anderen Ausführungsformen und/oder Aspekten und jeweils umgekehrt, sodass bezüglich der Offenbarung zu den einzelnen Ausführungsformen und/oder Aspekten stets wechselseitig Bezug genommen wird bzw. werden kann.

Gemäß dem ersten Aspekt stellt die Erfindung bereit: ein Verfahren zum Erfassen einer Betätigungshandlung eines Benutzers für eine berührungslose Betätigung (zum einen Entriegelungs- und/oder Öffnungsvorgang, zum anderen Schließ- und/oder Verriegelungsvorgang und/oder weiterhin zum Stoppen) eines beweglichen Teils eines Kraftfahrzeugs, insbesondere einer Klappe, wie z. B. einer Heckklappe, des Kraftfahrzeugs, oder einer Tür, wie z. B. Seitentür, vorzugsweise einer Schiebetür, wobei das Verfahren durch eine eigens dafür konzipierte Sensoranordnung durchgeführt wird, die mit zumindest einem Sensor zum Erfassen einer Annäherung des Benutzers und/oder eines Körperteils, wie z. B. eines Beins oder Fußes, des Benutzers an die Sensoranordnung ausgeführt ist, wobei durch den zumindest einen Sensor mindestens ein Detektionsbereich gebildet wird, in welchem eine Annäherung an den zumindest einen Sensor erfasst wird.

Die Sensoranordnung im Sinne der Erfindung kann vorzugsweise zwei Sensoren zum Erfassen einer Annäherung des Benutzers und/oder eines Körperteils des Benutzers an die Sensoranordnung umfassen, die bspw. als kapazitive Sensoren ausgebildet sein können. Bei einem kapazitiven Sensor ist es denkbar, dass die Signalantwort dadurch gebildet wird, dass eine Zeit vermessen wird, bis die Sensorelektrode des kapazitiven Sensors vollgeladen wurde.

Dabei kann die Sensoranordnung, insbesondere der zumindest eine Sensor, einen ersten Sensor und einen zweiten Sensor umfassen. Vorzugsweise können die zwei Sensoren unterschiedliche Detektionsbereiche ausbilden. Dabei kann sich ein erster Detektionsbereich in eine im Wesentlichen horizontale Richtung erstrecken, bspw. hinter dem Fahrzeug. Ein zweiter Detektionsbereich kann sich in eine im Wesentlichen vertikale Richtung erstrecken, bspw. in Richtung einer Fahrbahn.

Vorteilhafterweise können die zwei Sensoren eine längliche Erstreckung aufweisen und insbesondere in die Breitenrichtung des Fahrzeuges an diesem angeordnet werden. Dabei kann die Sensoranordnung, insbesondere der zumindest eine Sensor, mindestens eine leiterförmige Sensorelektrode, eine schlaufenförmige Sensorelektrode und/oder einen flächige Sensorelektrode aufweisen.

Die Sensoranordnung kann ggf. mit einem Trägerkörper ausgeführt sein, an dem der zumindest eine Sensor form- und/oder kraftschlüssig befestigt werden kann.

Ferner kann die Sensoranordnung eine Steuerelektronik aufweisen, die zum Ansteuern des zumindest einen Sensors und/oder zum Auswerten der Sensorsignale ausgeführt sein kann. Die Steuerelektronik kann vorzugsweise an einem Trägerkörper, wenn vorhanden, form- und/oder kraftschlüssig befestigt werden.

Nach einer erfolgreichen Erfassung einer Betätigungshandlung kann die Steuerelektronik ein bestimmtes Funktionssignal generieren, welches einen Betätigungsbefehl aufweist, und an eine fahrzeugseitige Steuereinheit weiterleiten, die die Betätigung des beweglichen Teils gemäß dem Betätigungsbefehl veranlassen kann.

Bei einer Erfassung einer Betätigungshandlung, insbesondere unmittelbar oder kurz nach einer Erfassung einer Annäherung, kann vorzugsweise eine Identifikationsabfrage vorgesehen sein, die bspw. nach dem Ansprechen des zumindest einen Sensors eingeleitet werden kann. Hierzu kann die Steuerelektronik ein bestimmtes Funktionssignal generieren, welches einen Betätigungsbefehl aufweist, und an eine fahrzeugseitige Steuereinheit weiterleiten, die eine fahrzeugseitige Kommunikationseinheit ansteuern kann, um eine Identifikationsabfrage einzuleiten und/oder die Ergebnisse der Identifikationsabfrage zu erhalten.

Eine Annäherung des Benutzers an die Sensoranordnung kann dadurch erfasst werden, dass der Benutzer in den Detektionsbereich des zumindest einen Sensors gelangt. Eine Annäherung des Benutzers an die Sensoranordnung kann bewirken, dass ein Signal des zumindest einen Sensors einen charakteristischen Hub, eine sog. charakteristische Signalantwort, zeigt.

Das Verfahren aufweisend:
- Überwachen eines Signals des zumindest einen Sensors auf eine charakteristische Signalantwort, die für eine Annäherung an den zumindest einen Sensor spezifisch ist,
- Erfassen (umfassend vorzugsweise: Sensieren bzw. Detektieren, Auswerten und Erkennen) einer Annäherung an den zumindest einen Sensor, wenn die Signalantwort des zumindest einen Sensors einen ersten (gezielt eingestellten) Schwellenwert erreicht, insbesondere unterschreitet,
- Erfassen (umfassend vorzugsweise: Sensieren bzw. Detektieren, Auswerten und Erkennen) einer Betätigungshandlung, wenn die Annäherung an den zumindest einen Sensor für eine bestimmte (gezielt eingestellte) Betätigungsdauer erfasst wird, insbesondere wenn die Signalantwort des zumindest einen Sensors für eine bestimmte Betätigungsdauer den ersten Schwellenwert unterschreitet.

Die Schritte des erfindungsgemäßen Verfahrens können nacheinander, zumindest teilweise überlappend und/oder simultan sowie wiederholend durchgeführt werden. Vorteilhafterweise können die Schritte des erfindungsgemäßen Verfahrens für jeden Sensor der Sensoranordnung durchgeführt werden, wobei nur dann eine Betätigung des beweglichen Teils veranlasst wird, wenn alle Sensoren der Sensoranordnung eine Betätigungshandlung erfassen.

Der Erfindungsgedanke liegt dabei darin, dass eine Annäherung an den zumindest einen Sensor in einem besonderen Ausmaße und während einer bestimmten Betätigungsdauer vorliegen muss, um eine erfolgreiche Betätigungshandlung erfassen zu können. Dadurch kann eine intuitive und einfache Betätigung des beweglichen Teils ermöglicht werden. Dabei kann der Benutzer, insbesondere vom Durchführen von komplizierten Bewegungsabläufen, Einhalten von mehreren Zeitspannen und/oder Interaktionen mit der Sensoranordnung, entlastet werden. Auf diese Weise können die Fehlversuche bei dem Wusch, das bewegliche Teil berührungslos betätigen zu können, erheblich reduziert bis gar vermieden werden. Zugleich kann die Erfassung einer Betätigungshandlung sicher und zuverlässig erfolgen. Somit kann mithilfe der Erfindung das Erfassen einer Betätigungshandlung robust, einfach und schnell sowie sicher und zuverlässig durchgeführt werden.

Bei einem beweglichen Teil in Form einer Heckklappe ist es denkbar, dass der Benutzer lediglich eine Schwenkbewegung zum und ggf. etwas unterhalb des Hecks des Fahrzeuges (einen sozusagen "halben" Kick) mit seinem Fuß vollführen braucht, um die Heckklappe zuverlässig öffnen zu können. Keine weiteren Handlungen, wie z. B. rechtzeitiges Rückziehen des Fußes, und/oder kein weiteres Interagieren mit der Sensoranordnung, wie z. B. Deaktivieren der Sensoranordnung usw., sind mehr erforderlich, um den Wunsch zum Betätigen der Heckklappe zuverlässig erkennen zu können. Durch die erfindungsgemäße gezielte Einstellung des ersten Schwellenwertes zum Erfassen einer Annäherung und der bestimmten Betätigungsdauer zum Erfassen einer Betätigungshandlung kann somit der Wunsch zum Betätigen der Heckklappe besonders schnell, einfach und intuitiv abgegeben werden.

Ferner kann vorgesehen sein, dass nach dem Erfassen einer Annäherung ein erstes Funktionssignal an eine zentrale Steuereinheit des Kraftfahrzeuges generiert wird, um eine Authentifizierungsprüfung des Benutzers einzuleiten. Auf diese Weise kann die Sicherheit bei einer berührungslosen Betätigung des beweglichen Teils erhöht werden, sodass nur ein berechtigter Benutzer diese auslösen kann. Auch Fehlauslösungen können dadurch erheblich reduziert bis sogar vermieden werden.

Weiterhin kann vorgesehen sein, dass nach dem Erfassen einer Betätigungshandlung ein zweites Funktionssignal an eine zentrale Steuereinheit des Kraftfahrzeuges generiert wird, um eine berührungslose Betätigung des beweglichen Teils einzuleiten. Auf diese Weise kann die berührungslose Betätigung des beweglichen Teils bei einem Vorliegen eines positiven Ergebnisses einer Authentifizierungsprüfung des Benutzers und unmittelbar nach dem Erfassen einer Betätigungshandlung, vorzugsweise ohne weitere Benutzeraktionen, die komplizierte Bewegungsmuster erfordern, eingeleitet werden, bspw. durch eine zentrale Steuereinheit des Kraftfahrzeuges.

Des Weiteren kann vorgesehen sein, dass nach dem Erfassen einer Annäherung eine bestimmte Rückmeldung an den Benutzer eingeleitet wird, bspw. durch eine zentrale Steuereinheit des Kraftfahrzeuges, z. B. durch Ansteuern eines Blinkers und/oder einer dritten Bremsleuchte. Auf diese Weise kann der Kundenkomfort erhöht, das Vertrauen in das System gesteigert und/oder eine intuitive Betätigung des beweglichen Teils sichergestellt werden.

Zudem kann vorgesehen sein, dass nach dem Erfassen einer Betätigungshandlung eine bestimmte Rückmeldung an den Benutzer eingeleitet wird, bspw. durch eine zentrale Steuereinheit des Kraftfahrzeuges, z. B. durch Ansteuern eines Blinkers und/oder einer dritten Bremsleuchte.

Vorteilhafterweise kann bei einem Vorliegen eines positiven Ergebnisses einer Authentifizierungsprüfung des Benutzers und unmittelbar nach dem Erfassen einer Betätigungshandlung und/oder ohne weitere Benutzeraktionen eine berührungslose Betätigung des beweglichen Teils eingeleitet werden, bspw. durch eine zentrale Steuereinheit des Kraftfahrzeuges. Auf diese Weise kann sogar einem unerfahrenen Benutzer eine einfache, intuitive, sichere und zuverlässige Betätigung des beweglichen Teils ermöglicht werden.

Des Weiteren kann es vorteilhaft sein, dass nach dem Erfassen einer Betätigungshandlung. insbesondere ohne weitere Benutzeraktionen, ein zweites Funktionssignal an eine zentrale Steuereinheit generiert wird, um eine berührungslose Betätigung des beweglichen Teils einzuleiten. Die Möglichkeit, die Betätigungshandlung sicher und zuverlässig zu erfassen, ermöglicht wiederum eine direkte Einleitung eines Betätigungsvorganges des beweglichen Teils. Der Kundenkomfort kann dadurch erheblich erhöht und das Vertrauen in das System auf eine vorteilhafte Weise gesteigert werden.

Ferner kann bei einem Verfahren vorgesehen sein, dass eine Annäherung an den zumindest einen Sensor nur dann erfasst wird, wenn die Signalantwort des zumindest einen Sensors in einem bestimmten Fenster verbleibt. Auf diese Weise kann der Detektionsbereich des zumindest einen Sensors mit einer erhöhten Genauigkeit nicht nur im Hinblick auf die tatsächliche Annäherung, sondern auch im Hinblick auf die sichere Betätigung, eingestellt werden.

Vorteilhafterweise kann das bestimmte Fenster zwischen dem ersten Schwellenwert und einem zweiten Schwellenwert gebildet werden. Auf diese Weise kann der Detektionsbereich des zumindest einen Sensors zwischen einem maximalen Abstand und einem minimalen Abstand zu dem zumindest einen Sensor gebildet werden.

Vorzugsweise kann eine Annäherung an den zumindest einen Sensor nur dann erfasst werden, wenn die Signalantwort des zumindest einen Sensors einen zweiten Schwellenwert überschreitet. Mithilfe des zweiten Schwellenwertes kann der Vorteil erreicht werden, dass die Sicherheit beim Betätigen des beweglichen Teils erhöht wird. Insbesondere kann dadurch die Verletzungsgefahr des Benutzers durch das sich öffnende oder schließende beweglichen Teil reduziert werden. Wenn sich der Benutzer zu nahe zu dem zumindest einen Sensor nähert und bspw. sich an das bewegliche Teil anlehnt, verlässt die Signalantwort das bestimmte Fenster, bspw. durch einen hohen Sprung bei dem Sensorsignal. Daraufhin wird keine Betätigungshandlung positiv erfasst.

Weiterhin kann bei einem Verfahren vorgesehen sein, dass eine Betätigungshandlung nur dann erfasst wird, wenn die Signalantwort des zumindest einen Sensors für die bestimmte Betätigungsdauer in einem bestimmten Fenster verbleibt, wobei insbesondere das bestimmte Fenster zwischen dem ersten Schwellenwert und einem zweiten Schwellenwert gebildet wird. Somit kann eine zuverlässige und sichere Erfassung einer Betätigungshandlung ermöglicht werden.

Des Weiteren kann bei einem Verfahren vorgesehen sein, dass der erste Schwellenwert gezielt beim Vermessen bzw. Konfigurieren der Sensoranordnung eingestellt wird. Bei einem Vermessen bzw. Konfigurieren der Sensoranordnung kann die Sensoranordnung bei einer vorgesehenen Einsatzstelle am Kraftfahrzeug montiert werden und bei möglichst unterschiedlichen Betriebsbedingungen und/oder verschiedenen Umweltsituationen vermessen werden. Auf diese Weise kann die Robustheit bei der Erfassung einer Betätigungshandlung noch weiter verbessert werden.

Vorteilhafterweise kann der erste Schwellenwert parametrisiert (insbesondere bei einem Konfigurieren der Sensoranordnung) werden. Dadurch lässt sich eine besonders zuverlässige Einstellung des ersten Schwellenwertes durchführen.

Zudem kann es vorteilhaft sein, dass der erste Schwellenwert in Abhängigkeit von einem Basiswert des Signals in einem unbetätigten Zustand des zumindest einen Sensors eingestellt wird. Das Einstellen des ersten Schwellenwertes kann bspw. bei einem Konfigurieren der Sensoranordnung durchgeführt werden. Dabei kann die Sensoranordnung bei einer vorgesehenen Einsatzstelle am Kraftfahrzeug montiert werden und bei möglichst unterschiedlichen Betriebsbedingungen und/oder verschiedenen Umweltsituationen vermessen werden. Vorteilhafterweise kann beim Konfigurieren der Sensoranordnung eine fortlaufende Schwellenwertanpassung ermöglicht werden. Dadurch kann sich ein geeigneter Versatzwert für die Abweichung der Sensorantwort von dem Basiswert ermittelt werden. Der erste Schwellenwert kann bspw. für ein minimales erforderliches Ansprechen des Sensors spezifisch sein, ab welchen eine Annäherung positiv erfasst wird.

Bspw. kann es vorteilhaft sein, dass der erste Schwellenwert durch Anpassen eines Basiswerts des Signals in einem unbetätigten Zustand des zumindest einen Sensors um einen ersten Versatzwert (insbesondere bei einem Konfigurieren der Sensoranordnung) eingestellt wird. Der erste Versatzwert kann dabei so gewählt werden, dass der zumindest eine Sensor bei möglichst unterschiedlichen Betriebsbedingungen und/oder verschiedenen Umweltsituationen anspricht bzw. eine charakteristische Signalantwort liefert. In Normalbetrieb der Sensoranordnung kann der erste Schwellenwert somit etwas unterhalb der Basislinie des Sensors liegen. Die Robustheit bei der Erfassung einer Betätigungshandlung erheblich verbessert werden.

Darüber hinaus kann bei einem Verfahren vorgesehen sein, dass der zweite Schwellenwert gezielt beim Vermessen bzw. Konfigurieren der Sensoranordnung eingestellt wird. Bei einem Vermessen bzw. Konfigurieren der Sensoranordnung kann die Sensoranordnung bei einer vorgesehenen Einsatzstelle am Kraftfahrzeug montiert werden und bei möglichst unterschiedlichen Betriebsbedingungen und/oder verschiedenen Umweltsituationen vermessen werden. Auf diese Weise kann die Sicherheit (gegen Verletzungen) bei der Erfassung einer Betätigungshandlung erhöht werden.

Vorteilhafterweise kann der zweite Schwellenwert parametrisiert (insbesondere bei einem Konfigurieren der Sensoranordnung) werden. Dadurch lässt sich eine besonders sichere Erfassung einer Betätigungshandlung durchführen.

Außerdem kann es vorteilhaft sein, dass der zweite Schwellenwert in Abhängigkeit von einem maximalen Ansprechswert des zumindest einen Sensors in einem betätigten Zustand des zumindest einen Sensors eingestellt wird. Das Einstellen des zweiten Schwellenwertes kann bspw. bei einem Konfigurieren der Sensoranordnung durchgeführt werden. Dabei kann die Sensoranordnung bei einer vorgesehenen Einsatzstelle am Kraftfahrzeug montiert werden und bei möglichst unterschiedlichen Betriebsbedingungen und/oder verschiedenen Umweltsituationen vermessen werden. Auf diese Weise kann eine fortlaufende Schwellenwerteinstellung beim Konfigurieren der Sensoranordnung ermöglicht werden. Dadurch kann ein geeigneter Versatzwert für die maximale Sensorantwort ermittelt werden. Der zweite Schwellenwert kann bspw. für ein maximales Ansprechen des Sensors spezifisch sein, bis zu welchem (noch) ein Wunsch erfasst wird, das bewegliche Teil betätigen zu wollen. Nach dem Überschreiten des zweiten Schwellenwertes wird keine Betätigungshandlung erfasst, da sich der Benutzer in diesem Fall möglicherweise zu nahe an der Sensoranordnung befindet, bspw. an dem beweglichen Teil anlehnt.

Bspw. kann es vorteilhaft sein, dass der zweite Schwellenwert durch Anpassen eines maximalen Ansprechswertes des zumindest einen Sensors in einem betätigten Zustand des zumindest einen Sensors um einen zweiten Versatzwert (insbesondere bei einem Konfigurieren der Sensoranordnung) eingestellt wird. Der zweite Versatzwert kann dabei so gewählt werden, dass der zumindest eine Sensor bei möglichst unterschiedlichen Betriebsbedingungen und/oder verschiedenen Umweltsituationen eine charakteristische Signalantwort liefert, ohne einen zu hohen Sprung über einen zulässigen Bereich zu erfahren. In Normalbetrieb der Sensoranordnung kann der zweite Schwellenwert somit maximaler Sensorwert festgelegt werden, bei dem eine Betätigungshandlung noch erfasst wird.

Im Rahmen der vorliegenden Offenbarung ist es denkbar, dass die bestimmte Betätigungsdauer kleiner als 3 s, insbesondere kleiner als 1 s eingestellt wird. Insbesondere kann die bestimmte Betätigungsdauer in einem zeitlichen Bereich zwischen 0,1 s bis 3 s, insbesondere zwischen 0,1 s und 1 s, vorzugsweise zwischen 0,1 s und 0,3 s, (insbesondere bei einem Konfigurieren der Sensoranordnung) eingestellt werden. Auf diese Weise kann eine schnelle und bequeme Betätigung des beweglichen Teils ermöglicht werden. Auch der Kundenkomfort kann dadurch erheblich erhöht werden.

Ferner kann bei einem Verfahren vorgesehen sein, dass die bestimmte Betätigungsdauer gezielt beim Vermessen bzw. Konfigurieren der Sensoranordnung eingestellt wird. Bei einem Vermessen bzw. Konfigurieren der Sensoranordnung kann die Sensoranordnung bei einer vorgesehenen Einsatzstelle am Kraftfahrzeug montiert werden und bei möglichst unterschiedlichen Betriebsbedingungen und/oder verschiedenen Umweltsituationen vermessen werden. Auf diese Weise kann die Robustheit bei der Erfassung einer Betätigungshandlung erheblich verbessert werden.

Vorteilhafterweise kann die bestimmte Betätigungsdauer derart eingestellt werden, dass nach dem Erreichen eines maximalen Ansprechswertes des zumindest einen Sensors in einem betätigten Zustand des zumindest einen Sensors der Sensorwert sich um einen bestimmten Ansprechschwellenwert verändert. Auf diese Weise kann eine besonders schnelle, einfache und fehlerfreie Betätigung des beweglichen Teils ermöglicht werden.

Vorteilhafterweise kann die bestimmte Betätigungsdauer parametrisiert (insbesondere bei einem Konfigurieren der Sensoranordnung) werden. Dadurch lassen sich die Sicherheit, die Zuverlässigkeit, die Schnelligkeit und der Komfort bei der Erfassung einer Betätigungshandlung erhöhen.

Weiterhin kann es vorteilhaft sein, dass die bestimmte Betätigungsdauer größer oder gleich als die Hälfte einer Zeitdauer beim Erfassen einer Betätigungshandlung des Benutzers eingestellt wird. Insbesondere kann die Zeitdauer einem charakteristischen Signalverlauf beim Erfassen einer Betätigungshandlung des Benutzers von einem Aktivieren des zumindest einen Sensors bis zu einem Deaktivieren des zumindest einen Sensors entsprechen. Vorzugsweise kann die Zeitdauer von einem Eintreten des Benutzers in den Detektionsbereich bis zum Erreichen eines maximalen Ansprechswertes des zumindest einen Sensors in einem betätigten Zustand des zumindest einen Sensors und von dem Verlassen des maximalen Ansprechswertes des zumindest einen Sensors in dem betätigten Zustand des zumindest einen Sensors bis zum Verlassen des mindestens einen Detektionsbereiches durch den Benutzer vermessen werden. Wenn eine Annäherung während einer solchen Zeitdauer erfasst wird, kann vorteilhafterweise mit einer hohen Sicherheit (gegen ungewollte Betätigungen) auch der Wunsch zum Betätigen des beweglichen Teils bzw. die Betätigungshandlung positiv erfasst werden. Ein Abwarten von weiteren Handlungen, die einem unerfahrenen Benutzer möglicherweise nicht bekannt sind und/oder nicht intuitiv vollzogen werden können, wie z. B. ein rechtzeitiges Entfernen aus dem Detektionsbereich, und/oder ein weiteres Interagieren mit der Sensoranordnung, wie z. B. Deaktivieren der Sensoranordnung, können dadurch entfallen.

Des Weiteren kann vorgesehen sein, dass das Verfahren durch die Sensoranordnung mit einem ersten Sensor und einem zweiten Sensor zum Erfassen einer Annäherung des Benutzers durchgeführt wird. Dabei kann durch den ersten Sensor ein erster Detektionsbereich gebildet werden, in welchem eine Annäherung an den ersten Sensor erfasst wird. Zudem kann durch den zweiten Sensor ein zweiter Detektionsbereich gebildet werden, in welchem eine Annäherung an den zweiten Sensor erfasst wird. Auf diese Weise kann eine räumliche, insbesondere dreidimensionale, Bewegung, bspw. eine Kickbewegung, eine Winkbewegung oder eine Schwenkbewegung, als Betätigungshandlung auf eine verbesserte Weise erfasst werden.

Vorteilhafterweise kann das Verfahren für jeden Sensor der Sensoranordnung durchgeführt werden. Dabei kann das Verfahren folgende Schritte umfassen:
- Überwachen eines Signals des ersten Sensors auf eine charakteristische Signalantwort, die für eine Annäherung an den ersten Sensor spezifisch ist,
- Erfassen einer Annäherung an den ersten Sensor, wenn die Signalantwort des ersten Sensors einen ersten (gezielt eingestellten) Schwellenwert erreicht, insbesondere unterschreitet,
- Überwachen eines Signals des zweiten Sensors auf eine charakteristische Signalantwort, die für eine Annäherung an den zweiten Sensor spezifisch ist,
- Erfassen einer Annäherung an den zweiten Sensor, wenn die Signalantwort des zweiten Sensors einen ersten (gezielt eingestellten) Schwellenwert erreicht, insbesondere unterschreitet,
- Erfassen einer Betätigungshandlung, wenn
   die Annäherung an den ersten Sensor für eine bestimmte (gezielt eingestellte) Betätigungsdauer und
   die Annäherung an den zweiten Sensor für eine bestimmte (gezielt eingestellte) Betätigungsdauer erfasst werden,
   insbesondere wenn
   die Signalantwort des ersten Sensors den ersten Schwellenwert für eine bestimmte Betätigungsdauer den ersten Schwellenwert unterschreitet und
   die Signalantwort des zweiten Sensors für eine bestimmte Betätigungsdauer den ersten Schwellenwert unterschreiten.

Vorteilhafterweise kann eine Betätigungshandlung nur dann erfasst werden, wenn
die Annäherung an den ersten Sensor für eine bestimmte Betätigungsdauer erfasst wird,
insbesondere wenn die Signalantwort des ersten Sensors für eine bestimmte Betätigungsdauer einen ersten Schwellenwert unterschreitet und/oder in einem bestimmten Fenster verbleibt, und
die Annäherung an den zweiten Sensor für eine bestimmte Betätigungsdauer erfasst wird,
insbesondere wenn die Signalantwort des zweiten Sensors für eine bestimmte Betätigungsdauer einen ersten Schwellenwert unterschreitet und/oder in einem bestimmten Fenster verbleibt.
Auf diese Weise kann eine verbesserte Erfassung einer Betätigungshandlung mithilfe einer Sensoranordnung durchgeführt werden, die mehrere, insbesondere zwei, Sensoren aufweist.

Die Schwellenwerte und/oder die Betätigungsdauer können für jeden Sensor individuell eingestellt werden.

Ferner ist es denkbar, dass die Schwellenwerte und/oder die Betätigungsdauer gleich für unterschiedliche Sensoren der Sensoranordnung eingestellt werden.

Zudem kann bei einem Verfahren vorgesehen sein, dass beim Erfassen einer Betätigungshandlung ein Zeitpunkt einer Aktivierung des ersten Sensors und ein Zeitpunkt einer Aktivierung des zweiten Sensors verglichen werden. Auf diese Weise kann eine Sicherheitsmaßnahme zum Plausibilisieren eines Wunsches zum Betätigen des beweglichen Teils bzw. zum Erfassen einer Betätigungshandlung bereitgestellt werden.

Vorteilhafterweise kann eine Betätigungshandlung nur dann positiv erfasst werden, wenn ein zeitlicher Unterschied zwischen einer Aktivierung des ersten Sensors und einer Aktivierung des zweiten Sensors unter einer bestimmten Zeitspanne liegt. Somit kann die Sicherheit (gegen ein ungewolltes und/oder unbeabsichtigtes Betätigen des beweglichen Teils) bei dem Erfassen einer Betätigungshandlung deutlich erhöht werden.

Außerdem kann bei einem Verfahren vorgesehen sein, dass beim Erfassen einer Betätigungshandlung ein maximaler Ansprechswert des ersten Sensors und ein maximaler Ansprechswert des zweiten Sensors verglichen werden. Auf diese Weise kann eine weitere Sicherheitsmaßnahme zum Plausibilisieren eines Wunsches zum Betätigen des beweglichen Teils bzw. zum Erfassen einer Betätigungshandlung bereitgestellt werden.

Vorteilhafterweise kann eine Betätigungshandlung nur dann erfasst werden, wenn eine Abweichung zwischen einem maximalen Ansprechswert des ersten Sensors und einem maximalen Ansprechswert des zweiten Sensors maximal 50 %, insbesondere 75 %, vorzugsweise 95 % beträgt. Auf diese Weise kann die Sicherheit (gegen ein ungewolltes und/oder unbeabsichtigtes Betätigen des beweglichen Teils) bei dem Erfassen einer Betätigungshandlung erheblich erhöht werden.

Vorteilhafterweise kann vor dem Erfassen einer Betätigungshandlung (bzw. vor Inbetriebnahme der Sensoranordnung) die Sensoranordnung vermessen, parametrisiert und/oder konfiguriert werden, insbesondere bei einer vorgesehenen Einbausituation, vorzugsweise in Abhängigkeit von unterschiedlichen Betriebsbedingungen und/oder verschiedener Umweltsituationen. Als Parameter können dabei der erste Schwellenwert (für zumindest einen Sensor, vorzugsweise für jeden Sensor der Sensoranordnung), ein zweiter Schwellenwert (für zumindest einen Sensor, vorzugsweise für jeden Sensor der Sensoranordnung), die bestimmte Betätigungsdauer (für zumindest einen Sensor, vorzugsweise für jeden Sensor der Sensoranordnung), ein zeitlicher Unterschied zwischen einer Aktivierung des ersten Sensors und einer Aktivierung des zweiten Sensors, eine Abweichung zwischen einem maximalen Ansprechswert des ersten Sensors und einem maximalen Ansprechswert des zweiten Sensors usw. eingestellt werden.

Grundsätzlich ist es denkbar, dass das Verfahren, welches wie oben beschrieben ablaufen kann, die Sensoranordnung mit zumindest einem kapazitiven, optischen und/oder einem radarbasierten Sensor durchgeführt wird. Auf diese Weise kann eine flexible Verwendung des Verfahrens mit unterschiedlichen Sensortechnologien für eine Annäherungserfassung und/oder eine berührungslose Erfassung ermöglicht werden.

Nach einem weiteren Vorteil, kann eine Identifikationsabfrage durchgeführt werden, um eine Berechtigung des Benutzers zu überprüfen. Beispielsweise kann eine Identifikationsabfrage eingeleitet werden, nachdem eine Betätigungshandlung durch einen ersten Sensor der Sensoranordnung erfasst wurde und vor dem Einleiten der Betätigung des beweglichen Teils.

Die erfindungsgemäße Aufgabe wird ferner gelöst durch: eine Sensoranordnung zum Erfassen einer Betätigungshandlung eines Benutzers für eine berührungslose Betätigung eines beweglichen Teils eines Kraftfahrzeugs, insbesondere einer Klappe, wie z. B. einer Heckklappe, oder einer Tür, wie z. B. einer Seitentür, bspw. einer Schiebertür, des Kraftfahrzeugs, mit zumindest einem Sensor zum Erfassen einer Annäherung des Benutzers und/oder eines Körperteils (21) des Benutzers (20) an die Sensoranordnung, wobei durch den zumindest einen Sensor mindestens ein Detektionsbereich gebildet wird, in welchem eine Annäherung an den zumindest einen Sensor erfasst wird, und einer Steuerelektronik, die dafür eingerichtet ist, ein Verfahren durchzuführen, welches wie oben beschrieben ablaufen kann. Die Vorteile, die oben im Zusammenhang mit dem Verfahren beschrieben wurden, können ebenfalls im Zusammenhang mit der erfindungsgemäßen Sensoranordnung erreicht werden. Auf diese Vorteile wird vorliegend vollumfänglich Bezug genommen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Seitenansicht auf ein Kraftfahrzeug mit einer Sensoranordnung im Rahmen der vorliegenden Erfindung,
- Figur 2: eine schematische Draufansicht auf ein Kraftfahrzeug mit einer Sensoranordnung im Rahmen der vorliegenden Erfindung,
- Figur 3: eine schematische Heckansicht auf ein Kraftfahrzeug mit einer Sensoranordnung im Rahmen der vorliegenden Erfindung,
- Figur 4: eine schematische Ansicht von Sensorsignalen einer Sensoranordnung im Rahmen der vorliegenden Erfindung, die zu einer erfolgreichen Betätigung des beweglichen Teils führt, und
- Figur 5: eine schematische Ansicht von Sensorsignalen einer Sensoranordnung im Rahmen der vorliegenden Erfindung, die zu keiner Betätigung des beweglichen Teils führt.

In den nachfolgenden Figuren werden für die gleichen technischen Merkmale auch von unterschiedlichen Ausführungsbeispielen die identischen Bezugszeichen verwendet. In der Regel werden die Bezugszeichen von den gleichen Ausführungsbeispielen nur einmal beschrieben.

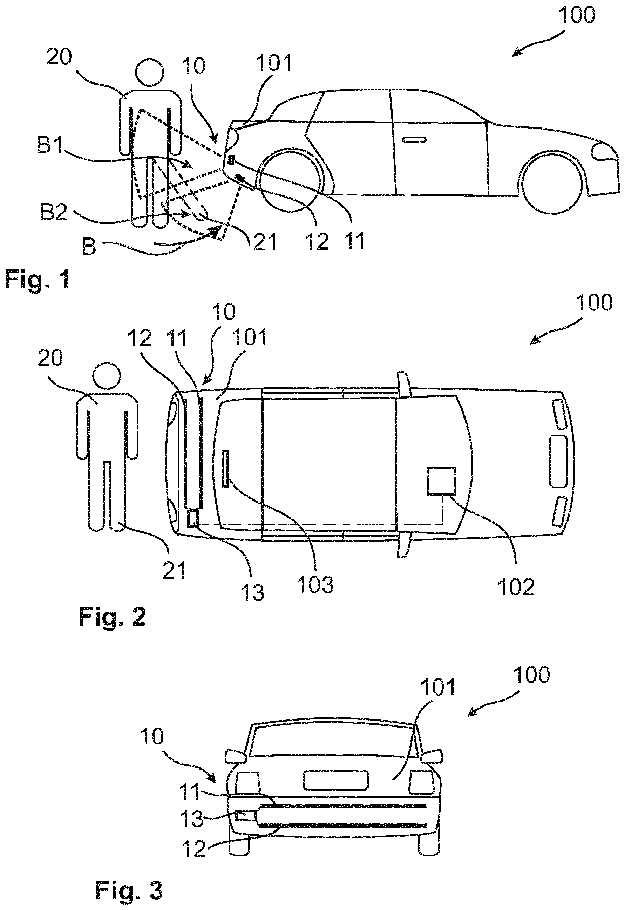

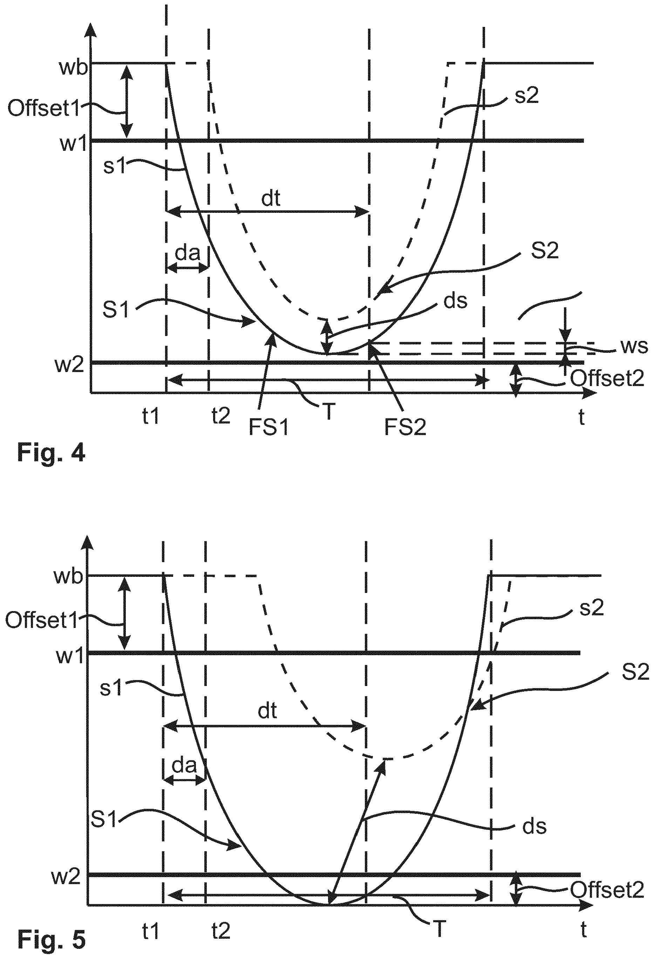

Die Figuren 1 bis 3 dienen jeweils ein Kraftfahrzeug 100, an welchem eine Sensoranordnung 10 angeordnet ist. Die Sensoranordnung 10 ist zum Erfassen einer Betätigungshandlung eines Benutzers 20 für eine berührungslose Betätigung eines beweglichen Teils 101 eines Kraftfahrzeugs 100, insbesondere einer Klappe, wie z. B. einer Heckklappe, oder einer Tür, wie z. B. einer Seitentür, bspw. einer Schiebertür, des Kraftfahrzeugs 100, mit zumindest einem Sensor 11, 12 zum Erfassen einer Annäherung des Benutzers 20 und/oder eines Körperteils 21, wie z. B. eines Beins oder eines Fußes, des Benutzers 20 an die Sensoranordnung 10. Wie es in der Figur 1 erkennbar ist, kann durch den zumindest einen Sensor 11, 12 mindestens ein Detektionsbereich B1, B2 gebildet werden, in welchem eine Annäherung an den zumindest einen Sensor 11, 12 erfasst werden kann. Die Sensoranordnung 10 ist mit einer Steuerelektronik 13 ausgeführt, die einzig dafür eingerichtet ist, ein Verfahren durchzuführen, welches mithilfe der Figuren 4 und 5 erklärt wird.

Die Figuren 1 bis 3 sowie die Figuren 4 und 5 dienen zum Erklären des erfindungsgemäßen Verfahrens, welches zum Erfassen einer Betätigungshandlung eines Benutzers für eine berührungslose Betätigung (umfassend zum einen Entriegelungs- und/oder Öffnungsvorgang, zum anderen einen Schließ- und/oder Verriegelungsvorgang und/oder weiterhin einen Stoppvorgang) eines beweglichen Teils 101 eines Kraftfahrzeugs 100, insbesondere einer Klappe, wie z. B. einer Heckklappe, oder einer Tür, wie z. B. einer Seitentür, bspw. einer Schiebertür, des Kraftfahrzeugs 100 ausgeführt ist. Das Verfahren kann vorteilhafterweise durch die eigens dafür konzipierte Sensoranordnung 10 durchgeführt werden, die in den Figuren 1 bis 3 schematisch gezeigt ist.

Die Sensoranordnung 10 im Sinne der Erfindung kann bspw. zwei Sensoren 11, 12 zum Erfassen einer Annäherung des Benutzers 20 und/oder eines Körperteils 21 des Benutzers 20 an die Sensoranordnung 10 umfassen. Die Sensoranordnung 10 kann dabei einen ersten Sensor 11 und einen zweiten Sensor 12 umfassen.

Die zwei Sensoren 11, 12 können bspw. als kapazitive Sensoren ausgebildet sein. Dabei kann die Sensoranordnung 10, insbesondere der zumindest eine Sensor 11, 12, mindestens eine leiterförmige Sensorelektrode, eine schlaufenförmige Sensorelektrode und/oder eine flächige Sensorelektrode aufweisen. Bei einem kapazitiven Sensor ist es denkbar, dass die Signalantwort dadurch gebildet wird, dass eine Zeit vermessen wird, bis die Sensorelektrode des kapazitiven Sensors vollgeladen wurde. Beispielshafte Signalverläufe sind in den Figuren 4 und 5 gezeigt.

Vorzugsweise können die zwei Sensoren 11, 12 unterschiedliche Detektionsbereiche B1, B2 ausbilden (vgl. die Figur 1). Dabei kann sich ein erster Detektionsbereich B1 des ersten Sensors 11 in eine im Wesentlichen horizontale Richtung erstrecken, bspw. hinter dem Fahrzeug 100. Ein zweiter Detektionsbereich B2 des zweiten Sensors 12 kann sich in eine im Wesentlichen vertikale Richtung erstrecken, bspw. in Richtung nach unten und etwas seitlich zu einer Fahrbahn.

Wie es die Figuren 2 und 3 andeuten, können die zwei Sensoren 11, 12 eine längliche Erstreckung aufweisen. Die zwei Sensoren 11, 12 können insbesondere in die Breitenrichtung des Fahrzeuges 100 im Heckbereich des Fahrzeuges 100, bspw. an bzw. hinter einem Stoßfänger angeordnet werden.

Die Sensoranordnung 10 kann ggf. mit einem lediglich aus Einfachheitsgründen nicht gezeigten Trägerkörper ausgeführt sein, an dem der zumindest eine Sensor 11, 12 form- und/oder kraftschlüssig befestigt werden kann. Wenn ein Trägerkörper vorhanden ist, kann die Sensoranordnung 10 mitsamt der Sensoren 11, 12 und der Steuerelektronik 13 mithilfe des Trägerkörpers am Fahrzeug befestigt werden.

Wie oben bereits erwähnt und wie es die Figuren 2 und 3 verdeutlichen, kann die Sensoranordnung 10 eine Steuerelektronik 13 aufweisen. Die Steuerelektronik 13 dient zum Ansteuern des zumindest einen Sensors 11, 12 für die Durchführung einer Erfassung einer Annäherung und/oder zum Auswerten der Sensorsignale für die Durchführung einer Erfassung einer Betätigungshandlung. Die Steuerelektronik 13 kann vorzugsweise speziell dafür eingerichtet sein, dass erfindungsgemäße Verfahren durchzuführen. Die Steuerelektronik 13 kann vorzugsweise an einem Trägerkörper, wenn vorhanden, form- und/oder kraftschlüssig befestigt werden.

Nach einer erfolgreichen Erfassung einer Betätigungshandlung kann die Steuerelektronik 13 ein bestimmtes bzw. zweites Funktionssignal FS2 generieren, welches einen Betätigungsbefehl aufweist, und an eine fahrzeugseitige Steuereinheit 102 weiterleiten, die schematisch in der Figur 2 gezeigt ist und die Betätigung des beweglichen Teils gemäß dem Betätigungsbefehl veranlassen kann.

Bei einer Erfassung einer Annäherung kann vorzugsweise eine Identifikationsabfrage vorgesehen sein, die bspw. nach dem Ansprechen des zumindest einen Sensors 11, 12 eingeleitet werden kann. Hierzu kann die Steuerelektronik 13 ein bestimmtes bzw. erstes Funktionssignal FS1 generieren, welches einen Betätigungsbefehl aufweist, und an eine fahrzeugseitige Steuereinheit 102 weiterleiten, die eine fahrzeugseitige Kommunikationseinheit 103 ansteuern kann, um eine Identifikationsabfrage einzuleiten und/oder die Ergebnisse der Identifikationsabfrage zu erhalten und/oder abzufragen.

Wie es die Figur 1 andeutet, kann eine Annäherung des Benutzers 20 an die Sensoranordnung 10 dadurch erfasst werden, dass der Benutzer 20 in den Detektionsbereich B1, B2 des zumindest einen Sensors 11, 12 gelangt.

Wie es wiederum die Figuren 4 und 5 zeigen, kann eine Annäherung des Benutzers an die Sensoranordnung 10 bewirken, dass ein Signal s1, s2 des zumindest einen Sensors 11, 12 einen charakteristischen Hub, eine sog. charakteristische Signalantwort S1, S2, zeigt.

Das erfindungsgemäße Verfahren weist folgende Schritte auf:
- Überwachen eines Signals s1, s2 des zumindest einen Sensors 11, 12 auf eine charakteristische Signalantwort S1, S2, die für eine Annäherung an den zumindest einen Sensor 11, 12 spezifisch ist,
- Erfassen (umfassend vorzugsweise: Sensieren bzw. Detektieren, Auswerten und Erkennen) einer Annäherung an den zumindest einen Sensor 11, 12, wenn die Signalantwort S1, S2 des zumindest einen Sensors 11, 12 einen ersten gezielt eingestellten Schwellenwert w1 erreicht, insbesondere unterschreitet,
- Erfassen (umfassend vorzugsweise: Sensieren bzw. Detektieren, Auswerten und Erkennen) einer Betätigungshandlung, wenn die Annäherung an den zumindest einen Sensor 11, 12 für eine bestimmte (gezielt eingestellte) Betätigungsdauer dt erfasst wird, insbesondere wenn die Signalantwort S1, S2 des zumindest einen Sensors 11, 12 für eine bestimmte Betätigungsdauer dt den ersten Schwellenwert w1 unterschreitet.

Die Schritte des erfindungsgemäßen Verfahrens können nacheinander, zumindest teilweise überlappend und/oder simultan sowie wiederholend durchgeführt werden.

Wie es die Figuren 4 und 5 verdeutlichen, können die Schritte des erfindungsgemäßen Verfahrens für jeden Sensor 11, 12 der Sensoranordnung 10 durchgeführt werden, wobei nur dann eine Betätigung des beweglichen Teils 101 veranlasst wird, wenn alle Sensoren 11, 12 der Sensoranordnung eine Betätigungshandlung erfassen. Auf den Ablauf des Verfahrens bei einer Sensoranordnung 10 mit zwei Sensoren 11, 12 wird im Nachfolgenden noch im Detail eingegangen.

Wie es die Figur 4 zeigt, sieht die Erfindung vor, dass eine Annäherung an den zumindest einen Sensor 11, 12 in einem besonderen Ausmaß (insbesondere mit einer Signalstärke zwischen den Schwellenwerten w1 und w2) und während einer bestimmten Betätigungsdauer (mindestens während der bestimmten Betätigungsdauer dt) vorliegen muss, um eine erfolgreiche Betätigungshandlung erfassen zu können. Auf diese Weise kann das Erfassen einer Betätigungshandlung robust, einfach und schnell sowie sicher und zuverlässig durchgeführt werden.

Wie es die Figuren 1 bis 3 zeigen, kann bei einem beweglichen Teil 101 in Form einer Heckklappe vorgesehen sein, dass der Benutzer 20 lediglich eine Schwenkbewegung B zum und ggf. etwas unterhalb des Hecks des Fahrzeuges 100 mit seinem Fuß vollführen braucht, einen sozusagen "halben" Kick, bspw. umfassend ein "Kicken" und "Halten", um den Wunsch zum Betätigen der Heckklappe zuverlässig an die Sensoranordnung 10 zu übermitteln. Vorteilhafterweise werden keine weiteren Handlungen von dem Benutzer 20 erfordert, die er in bestimmten Reihenfolgen und/oder in bestimmten Zeitabständen vollführen muss, wie z. B. rechtzeitiges Rückziehen des Fußes, sowie kein weiteres Interagieren mit der Sensoranordnung 10, wie z. B. Deaktivieren der Sensoranordnung usw., um die Heckklappe zuverlässig öffnen zu können.

Durch die erfindungsgemäße gezielte Einstellung des ersten Schwellenwertes w1 zum Erfassen einer Annäherung und der bestimmten Betätigungsdauer dt zum Erfassen einer Betätigungshandlung kann somit der Wunsch zum Betätigen der Heckklappe besonders schnell, einfach und intuitiv zum Ausdruck gebracht und sicher und zuverlässig erfasst werden.

Wie es die Figur 4 andeutet, kann nach dem Erfassen einer Annäherung durch die Steuerelektronik 13 vorzugsweise ein erstes Funktionssignal FS1 an eine zentrale Steuereinheit 102 des Kraftfahrzeuges 100 generiert werden, um eine Authentifizierungsprüfung des Benutzers 20 einzuleiten.

Wie es die Figur 4 andeutet, kann nach dem Erfassen einer Betätigungshandlung durch die Steuerelektronik 13 ein zweites Funktionssignal FS2 an eine zentrale Steuereinheit 102 des Kraftfahrzeuges 100 generiert werden, um eine berührungslose Betätigung des beweglichen Teils 101 einzuleiten.

Über die erfasste Annäherung und/oder die erfasste Betätigungshandlung kann jeweils eine bestimmte Rückmeldung an den Benutzer 20 eingeleitet werden, bspw. durch eine zentrale Steuereinheit 102 des Kraftfahrzeuges 100. Hierzu können bspw. speziell hierfür vorgesehene oder bereits am Fahrzeug 100 vorhandene Blinker und/oder Leuchten, wie z. B. eine dritte Bremsleuchte, entsprechend angesteuert werden. Auf diese Weise kann der Benutzer 20 eine Rückmeldung über die Funktionsweise der Sensoranordnung 10 erhalten. Auf diese Weise kann der Kundenkomfort erhöht und das Vertrauen in das System gesteigert werden. Zudem kann dadurch eine intuitive Betätigung des beweglichen Teils 101 ermöglicht werden.

Vorteilhafterweise kann bei einem Vorliegen eines positiven Ergebnisses einer Authentifizierungsprüfung des Benutzers 20 und nach dem Erfassen einer Betätigungshandlung, insbesondere ohne weitere Benutzeraktionen, ein zweites Funktionssignal FS2 durch die Elektronikeinheit 13 an eine zentrale Steuereinheit 102 generiert werden, um eine berührungslose Betätigung des beweglichen Teils 101 einzuleiten. Der Kundenkomfort und das Vertrauen in die Funktionalität der Sensoranordnung 10 können dadurch erheblich erhöht werden.

Ferner deuten die Figuren 4 und 5, dass eine Annäherung an den zumindest einen Sensor 11, 12 nur dann erfasst wird, wenn die Signalantwort S1, S2 des zumindest einen Sensors 11, 12 in einem bestimmten Fenster w1, w2 verbleibt. Das bestimmte Fenster w1, w2 kann dabei zwischen dem ersten Schwellenwert w1 und einem zweiten Schwellenwert w2 gebildet werden. Somit kann der jeweilige Detektionsbereich B1, B2 des zugehörigen Sensors 11, 12 zwischen einem maximalen Abstand und einem minimalen Abstand zu dem zumindest einen Sensor gebildet werden.

Weiterhin kann eine Betätigungshandlung nur dann erfasst werden, wenn die Signalantwort S1, S2 des zumindest einen Sensors 11, 12 für die bestimmte Betätigungsdauer dt in einem bestimmten Fenster w1, w2 verbleibt.

Wie es die Figur 4 zeigt, kann eine Annäherung an den zumindest einen Sensor 11, 12 nur dann erfasst werden, wenn die Signalantwort S1, S2 des zumindest einen Sensors 11, 12 einen zweiten Schwellenwert w2 überschreitet.

In dem Beispiel der Figur 5 ist die Signalantwort S1 des ersten Sensors 11 so stark, dass die Signalantwort S1 das bestimmte Fenster w1, w2 verlässt. In diesem Fall wird keine Betätigungshandlung erfasst, da erkannt wird, dass sich der Benutzer 20 zu nahe an dem zumindest einen Sensor 11, 12 befindet, möglicherweise, weil sich der Benutzer 20 an das bewegliche Teil 101 anlehnt.

Mithilfe des zweiten Schwellenwertes w2 bzw. des bestimmten Fensters w1, w2 für die Signalantwort S1, S2 kann somit der Vorteil erreicht werden, dass die Sicherheit beim Betätigen des beweglichen Teils 101 erhöht wird. Insbesondere kann dadurch die Verletzungsgefahr des Benutzers 20 durch Stoßen mit dem sich öffnenden oder schließenden beweglichen Teil 101 reduziert bis gar vermieden werden.

Des Weiteren kann der erste Schwellenwert w1 gezielt beim Vermessen bzw. Konfigurieren der Sensoranordnung 10 eingestellt werde. Vorteilhafterweise kann der erste Schwellenwert w1, insbesondere bei einem Konfigurieren der Sensoranordnung 10, parametrisiert werden.

Wie es die Figuren 4 und 5 verdeutlichen, kann der erste Schwellenwert w1 in Abhängigkeit von einem Basiswert wb des Signals s1, s2 in einem unbetätigten Zustand des zumindest einen Sensors 11, 12 eingestellt werden. Der Basiswert wb des Signals s1, s2 liegt in der Darstellung der Figuren 4 und 5 etwas oberhalb des ersten Schwellenwerts w1.

Die Figuren 4 und 5 deuten ferner an, dass der erste Schwellenwert w1 durch Anpassen eines Basiswerts wb des Signals s1, s2 in einem unbetätigten Zustand des zumindest einen Sensors 11, 12 um einen ersten Versatzwert Offset1 eingestellt werden kann. Der erste Versatzwert Offset1 kann dabei so gewählt werden, dass der zumindest eine Sensor 11, 12 bei möglichst unterschiedlichen Betriebsbedingungen und/oder verschiedenen Umweltsituationen anspricht und eine charakteristische Signalantwort liefert. In Normalbetrieb der Sensoranordnung 10 kann der erste Schwellenwert w1 somit etwas unterhalb der Basislinie des zumindest einen Sensors 11, 12 in unbetätigten Zustand des zumindest einen Sensors 11, 12 liegen.

Darüber hinaus kann auch der zweite Schwellenwert w2 gezielt beim Vermessen bzw. Konfigurieren der Sensoranordnung 10 eingestellt wird. Vorteilhafterweise kann der zweite Schwellenwert w2, insbesondere bei einem Konfigurieren der Sensoranordnung 10, parametrisiert werden.

Der zweite Schwellenwert w2 kann bspw. in Abhängigkeit von einem maximalen Ansprechswert des zumindest einen Sensors 11, 12 in einem betätigten Zustand des zumindest einen Sensors 11, 12, z. B. durch Anpassen des maximalen Ansprechswerts des zumindest einen Sensors 11, 12 in einem betätigten Zustand des zumindest einen Sensors 11, 12 um einen zweiten Versatzwert Offset2, eingestellt werden.

Vorteilhafterweise kann die bestimmte Betätigungsdauer dt kleiner als 3 s, insbesondere kleiner als 1 s eingestellt werden. Noch konkreter kann die Betätigungsdauer dt in einem zeitlichen Bereich zwischen 0,1 s bis 3 s, insbesondere zwischen 0,1 s und 1 s, vorzugsweise zwischen 0,1 s und 0,3 s, eingestellt werden. Die bestimmte Betätigungsdauer dt kann vorteilhafterweise gezielt beim Vermessen bzw. Konfigurieren der Sensoranordnung 10 eingestellt werden. Vorteilhafterweise kann die bestimmte Betätigungsdauer dt, insbesondere bei einem Konfigurieren der Sensoranordnung 10, parametrisiert werden.

Wie es die Figur 4 andeutet, kann die bestimmte Betätigungsdauer dt derart eingestellt werden, dass nach dem Erreichen eines maximalen Ansprechswertes des zumindest einen Sensors 11, 12 in einem betätigten Zustand des zumindest einen Sensors 11, 12 der Sensorwert sich um einen bestimmten Ansprechschwellenwert ws verändert.

Zum Vermessen bzw. Konfigurieren der Sensoranordnung 10 kann die Sensoranordnung 10 bei einer vorgesehenen Einsatzstelle am Kraftfahrzeug 100 montiert werden und bei möglichst unterschiedlichen Betriebsbedingungen und/oder verschiedenen Umweltsituationen vermessen werden.

Die Figuren 4 und 5 verdeutlichen einen weiteren Vorteil der Erfindung, dass die bestimmte Betätigungsdauer dt größer oder gleich als die Hälfte einer Zeitdauer T beim Erfassen einer Betätigungshandlung des Benutzers 20 eingestellt wird. Insbesondere kann die Zeitdauer T einem charakteristischen Signalverlauf beim Erfassen einer Betätigungshandlung des Benutzers 20 von einem Aktivieren des zumindest einen Sensors 11, 12 bis zu einem Deaktivieren des zumindest einen Sensors 11, 12 entsprechen. Vorzugsweise kann die Zeitdauer T von einem Eintreten des Benutzers 20 in den Detektionsbereich B1, B2 bis zum Erreichen eines maximalen Ansprechswertes des zumindest einen Sensors 11, 12 in einem betätigten Zustand des zumindest einen Sensors 11, 12 und von dem Verlassen des maximalen Ansprechswertes des zumindest einen Sensors 11, 12 in dem betätigten Zustand des zumindest einen Sensors 11, 12 bis zum Verlassen des mindestens einen Detektionsbereiches B1, B2 durch den Benutzer 20 vermessen werden. Wenn eine Annäherung während einer solchen Zeitdauer T erfasst wird, kann vorteilhafterweise mit einer hohen Sicherheit (gegen ungewollte Betätigungen) erkannt werden, dass eine gewollte Betätigungshandlung vorliegt. Auf diese Weise kann mir einer auch hohen Sicherheit erkannt werden, dass der Benutzer 20 mit seiner Bewegung tatsächlich einen Wunsch zum Betätigen des beweglichen Teils 101 äußern möchte. Ein Abwarten von weiteren Handlungen, die einem unerfahrenen Benutzer möglicherweise nicht bekannt sind, wie z. B. ein rechtzeitiges Entfernen aus dem jeweiligen Detektionsbereich B1, B2, und/oder ein weiteres Interagieren mit der Sensoranordnung 10, wie z. B. Deaktivieren der Sensoranordnung 10 können dadurch entfallen. Zugleich kann dadurch eine sichere und zuverlässige Betätigung des beweglichen Teils 101 schnell und einfach bewirkt werden.

Wie oben bereits erwähnt, kann das Verfahren mithilfe einer Sensoranordnung 10 mit einem ersten Sensor 11 und einem zweiten Sensor 12 zum Erfassen einer Annäherung des Benutzers 20 durchgeführt werden. Wie es die Figur 1 zeigt, kann durch den ersten Sensor 11 ein erster Detektionsbereich B1 gebildet werden, in welchem eine Annäherung an den ersten Sensor 11 erfasst wird. Zudem zeigt die Figur 1, dass durch den zweiten Sensor 12 ein zweiter Detektionsbereich B2 gebildet werden kann, in welchem eine Annäherung an den zweiten Sensor 12 erfasst wird.

Vorteilhafterweise kann das Verfahren für jeden Sensor 11, 12 der Sensoranordnung 10 durchgeführt werden.

Hierzu kann das Verfahren folgende Schritte umfassen:
- Überwachen eines Signals s1 des ersten Sensors 11 auf eine charakteristische Signalantwort S1, die für eine Annäherung an den ersten Sensor 11 spezifisch ist,
- Erfassen einer Annäherung an den ersten Sensor 11, wenn die Signalantwort S1 des ersten Sensors 11 einen ersten (gezielt eingestellten) Schwellenwert w1_s1 erreicht, insbesondere unterschreitet,
- Überwachen eines Signals s2 des zweiten Sensors 12 auf eine charakteristische Signalantwort S2, die für eine Annäherung an den zweiten Sensor 12 spezifisch ist,
- Erfassen einer Annäherung an den zweiten Sensor 12, wenn die Signalantwort S2 des zweiten Sensors 12 einen ersten (gezielt eingestellten) Schwellenwert w1_s2 erreicht, insbesondere unterschreitet,
- Erfassen einer Betätigungshandlung, wenn
   die Annäherung an den ersten Sensor 11 für eine bestimmte (gezielt eingestellte) Betätigungsdauer dt1 und
   die Annäherung an den zweiten Sensor 12 für eine bestimmte (gezielt eingestellte) Betätigungsdauer dt2 erfasst werden,
   insbesondere wenn
   die Signalantwort S1 des ersten Sensors 11 den ersten Schwellenwert w1_s1 für eine bestimmte Betätigungsdauer dt1 den ersten Schwellenwert w1 unterschreitet und
   die Signalantwort S2 des zweiten Sensors 12 für eine bestimmte Betätigungsdauer dt2 den ersten Schwellenwert w1_s2 unterschreiten.

Vorteilhafterweise kann eine Betätigungshandlung nur dann erfasst werden, wenn
die Annäherung an den ersten Sensor 11 für eine bestimmte Betätigungsdauer dt1 erfasst wird,
insbesondere wenn die Signalantwort S1 des ersten Sensors 11 für eine bestimmte Betätigungsdauer dt1 einen ersten Schwellenwert w1_s1 unterschreitet und/oder in einem bestimmten Fenster w1_s1, w2_s1 verbleibt, und
die Annäherung an den zweiten Sensor 12 für eine bestimmte Betätigungsdauer dt2 erfasst wird,
insbesondere wenn die Signalantwort S2 des zweiten Sensors 12 für eine bestimmte Betätigungsdauer dt2 einen ersten Schwellenwert w1_s2 unterschreitet und/oder in einem bestimmten Fenster w1_s2, w2_s2 verbleibt.

Die Schwellenwerte w1, w1_s1, w1_s2, w2, w2_s1, w2_s2 und/oder die Betätigungsdauer dt, dt1, dt2 können für jeden Sensor 11, 12 individuell eingestellt werden. Dabei kann grundsätzlich gelten:
w1_s1 # w1_s2 und/oder w2_s1 # w2_s2 und/oder dt1 # dt2.

Ferner ist es denkbar, dass die Schwellenwerte w1, w1_s1, w1_s2, w2, w2_s1, w2_s2 und/oder die Betätigungsdauer dt, dt1, dt2 gleich für unterschiedliche Sensoren 11, 12 der Sensoranordnung 10 eingestellt werden. Dabei kann grundsätzlich gelten:
w1_s1 = w1_s2 und/oder w2_s1 = w2_s2 und/oder dt1 = dt2.

Um eine gewollte Betätigungshandlung (vgl. Figur 4) von einer ungewollten Handlung (vgl. Figur 5) zu unterscheiden, kann das Verfahren mindestens eine erste Sicherheitsmaßnahme vorsehen, dass beim Erfassen einer Betätigungshandlung ein Zeitpunkt t1 einer Aktivierung des ersten Sensors 11 und ein Zeitpunkt t2 einer Aktivierung des zweiten Sensors 12 verglichen werden. Vorteilhfterweise kann eine Betätigungshandlung nur dann positiv erfasst werden, wenn ein zeitlicher Unterschied t2-t1 zwischen einer Aktivierung des ersten Sensors 11 und einer Aktivierung des zweiten Sensors 12 unter einer bestimmten Zeitspanne da liegt. Bei einer gewollten Betätigungshandlung (vgl. Figur 4) wird erwartet, dass der Benutzer 20 durch Kicken und Halten zuerst den ersten Sensor 11 und mit einer geringen zeitlichen Verzögerung den zweiten Sensor 12 aktiviert.

Um eine gewollte Betätigungshandlung (vgl. Figur 4) von einer ungewollten Handlung (vgl. Figur 5) zu unterscheiden, kann das Verfahren eine zweite Sicherheitsmaßnahme vorsehen, dass beim Erfassen einer Betätigungshandlung ein maximaler Ansprechswert des ersten Sensors 11 und ein maximaler Ansprechswert des zweiten Sensors 12 verglichen werden. Wenn die Betätigung nicht gewollt ist, bspw. durch ein Anlehnen das Benutzers 20 am Heck des Fahrzeuges 100 und/oder durch ein vorbeilaufendes Objekt, wird nur einer von den Sensoren 11, 12 aktiviert und die Signalantwort des anderen von den Sensoren 11, 12 kommt später oder gar nicht oder in einem wesentlich abgeschwächten Ausmaß. Vorteilhfterweise kann eine Betätigungshandlung nur dann erfasst wird, wenn eine Abweichung ds zwischen einem maximalen Ansprechswert des ersten Sensors 11 und einem maximalen Ansprechswert des zweiten Sensors 12 maximal 50 %, insbesondere 75 %, vorzugsweise 95 % beträgt.

Im Rahmen der vorliegenden Offenbarung ist es denkbar, dass die Sensoranordnung 10 vor dem Erfassen einer Betätigungshandlung bzw. vor Inbetriebnahme der Sensoranordnung 10 vermessen, parametrisiert und/oder konfiguriert wird, insbesondere bei einer vorgesehenen Einbausituation, vorzugsweise in Abhängigkeit von unterschiedlichen Betriebsbedingungen und/oder verschiedener Umweltsituationen.

Als Parameter können dabei vorgesehen werden:
- der erste Schwellenwert w1 (für den zumindest einen Sensor 11, 12, vorzugsweise für jeden Sensor 11, 12 der Sensoranordnung 10) bzw. der erste Versatzwert Offset1, und/oder
- der zweite Schwellenwert w2 (für den zumindest einen Sensor 11, 12, vorzugsweise für jeden Sensor 11, 11 der Sensoranordnung 10) bzw. der zweite Versatzwert Offset2, und/oder
- die bestimmte Betätigungsdauer dt (für den zumindest einen Sensor 11, 12, vorzugsweise für jeden Sensor 11, 12 der Sensoranordnung 10), und/oder
- ein zeitlicher Unterschied t2-t1 zwischen einer Aktivierung des ersten Sensors 11 und einer Aktivierung des zweiten Sensors 12, und/oder
- eine Abweichung ds zwischen einem maximalen Ansprechswert des ersten Sensors 11 und einem maximalen Ansprechswert des zweiten Sensors 12 usw. eingestellt werden.

Grundsätzlich ist es denkbar, dass das Verfahren, welches wie oben beschrieben ablaufen kann, die Sensoranordnung 10 mit zumindest einem kapazitiven, optischen und/oder einem radarbasierten Sensor 11, 12 durchgeführt werden kann. Ferner kann das Verfahren eine Identifikationsabfrage vorsehen, um eine Berechtigung des Benutzers 20 zu überprüfen, das bewegliche Teil 101 betätigen zu dürfen. Beispielsweise kann eine Identifikationsabfrage eingeleitet werden, nachdem eine Betätigungshandlung durch einen ersten Sensor 11 der Sensoranordnung 10 erfasst wurde und vor dem Einleiten der Betätigung des beweglichen Teils 100.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 100: Kraftfahrzeug
- 101: bewegliches Teil, Klappe, Heckklappe
- 102: Steuereinheit
- 103: Kommunikationseinheit

- 10: Sensoranordnung
- 11: Sensor, erster Sensor
- 12: Sensor, zweiter Sensor
- 13: Steuerelektronik

- 20: Benutzer
- 21: Körperteil

- B: Schwenkbewegung

- B1: Detektionsbereich
- B2: Detektionsbereich

- dt: Betätigungsdauer
- da: Zeitspanne
- ds: Abweichung

- Offset1: erster Versatzwert
- Offset2: zweiter Versatzwert

- s1: Signal
- s2: Signal

- s1_max: maximaler Ansprechswert
- s2_max: maximaler Ansprechswert

- S1: Signalantwort
- S2: Signalantwort

- FS1: Funktionssignal
- FS2: Funktionssignal

- t: Zeit
- T: Zeitdauer

- wb: Basiswert
- w1: erster Schwellenwert
- w2: zweiter Schwellenwert
- ws: Ansprechschwellenwert
- w1_s1: erster Schwellenwert
- w2_s1: zweiter Schwellenwert
- w1_s2: erster Schwellenwert
- w2_s2: zweiter Schwellenwert

## Patentansprüche

1. Verfahren zum Erfassen einer Betätigungshandlung eines Benutzers (20) für eine berührungslose Betätigung eines beweglichen Teils (101) eines Kraftfahrzeugs (100), insbesondere einer Klappe oder einer Tür, des Kraftfahrzeugs (100),
durch eine Sensoranordnung (10), mit zumindest einem Sensor (11, 12) zum Erfassen einer Annäherung des Benutzers (20) und/oder eines Körperteils (21) des Benutzers (20) an die Sensoranordnung (10), wobei durch den zumindest einen Sensor (11, 12) mindestens ein Detektionsbereich (B1, B2) gebildet wird, in welchem eine Annäherung an den zumindest einen Sensor (11, 12) erfasst wird,
aufweisend:
- Überwachen eines Signals (s1, s2) des zumindest einen Sensors (11, 12) auf eine charakteristische Signalantwort (S1, S2), die für eine Annäherung an den zumindest einen Sensor (11, 12) spezifisch ist,
- Erfassen einer Annäherung an den zumindest einen Sensor (11, 12), wenn die Signalantwort (S1, S2) des zumindest einen Sensors (11, 12) einen ersten Schwellenwert (w1) erreicht, insbesondere unterschreitet,
- Erfassen einer Betätigungshandlung, wenn die Annäherung an den zumindest einen Sensor (11, 12) für eine bestimmte Betätigungsdauer (dt) erfasst wird, insbesondere wenn die Signalantwort (S1, S2) des zumindest einen Sensors (11, 12) für eine bestimmte Betätigungsdauer (dt) den ersten Schwellenwert (w1) unterschreitet.

2. Verfahren nach Anspruch 1,
**dadurch gekennzeichnet,**
**dass** nach dem Erfassen einer Annäherung ein erstes Funktionssignal (FS1) an eine zentrale Steuereinheit (102) des Kraftfahrzeuges (100) generiert wird, um eine Authentifizierungsprüfung des Benutzers (20) einzuleiten,
und/oder dass nach dem Erfassen einer Betätigungshandlung ein zweites Funktionssignal (FS2) an eine zentrale Steuereinheit (102) des Kraftfahrzeuges (100) generiert wird, um eine berührungslose Betätigung des beweglichen Teils (101) einzuleiten,
wobei insbesondere nach dem Erfassen einer Annäherung eine bestimmte Rückmeldung an den Benutzer (20) eingeleitet wird, insbesondere durch eine zentrale Steuereinheit (102) des Kraftfahrzeuges (100), vorzugsweise durch Ansteuern eines Blinkers und/oder einer dritten Bremsleuchte,
wobei vorzugsweise nach dem Erfassen einer Betätigungshandlung eine bestimmte Rückmeldung an den Benutzer (20) eingeleitet wird, insbesondere durch eine zentrale Steuereinheit (102) des Kraftfahrzeuges (100), vorzugsweise durch Ansteuern eines Blinkers und/oder einer Leuchte, bspw. einer dritten Bremsleuchte.

3. Verfahren nach Anspruch 1 oder 2,
**dadurch gekennzeichnet,**
**dass** bei einem Vorliegen eines positiven Ergebnisses einer Authentifizierungsprüfung des Benutzers (20) und unmittelbar nach dem Erfassen einer Betätigungshandlung und/oder ohne weitere Benutzeraktionen eine berührungslose Betätigung des beweglichen Teils (101) eingeleitet werden kann, insbesondere durch eine zentrale Steuereinheit (102) des Kraftfahrzeuges (100),
und/oder dass nach dem Erfassen einer Betätigungshandlung, insbesondere ohne weitere Benutzeraktionen, ein zweites Funktionssignal (FS2) an eine zentrale Steuereinheit (102) generiert wird, um eine berührungslose Betätigung des beweglichen Teils (101) einzuleiten.

4. Verfahren nach einem der vorhergehenden Ansprüche,
**dadurch gekennzeichnet,**
**dass** eine Annäherung an den zumindest einen Sensor (11, 12) nur dann erfasst wird, wenn die Signalantwort (S1, S2) des zumindest einen Sensors (11, 12) in einem bestimmten Fenster (w1, w2) verbleibt,
wobei insbesondere das bestimmte Fenster (w1, w2) zwischen dem ersten Schwellenwert (w1) und einem zweiten Schwellenwert (w2) gebildet wird,
wobei vorzugsweise eine Annäherung an den zumindest einen Sensor (11, 12) nur dann erfasst wird, wenn die Signalantwort (S1, S2) des zumindest einen Sensors (11, 12) einen zweiten Schwellenwert (w2) überschreitet.

5. Verfahren nach einem der vorhergehenden Ansprüche,
**dadurch gekennzeichnet,**
**dass** eine Betätigungshandlung nur dann erfasst wird, wenn die Signalantwort (S1, S2) des zumindest einen Sensors (11, 12) für die bestimmte Betätigungsdauer (dt) in einem bestimmten Fenster (w1, w2) verbleibt, wobei insbesondere das bestimmte Fenster (w1, w2) zwischen dem ersten Schwellenwert (w1) und einem zweiten Schwellenwert (w2) gebildet wird.

6. Verfahren nach einem der vorhergehenden Ansprüche,
**dadurch gekennzeichnet,**
**dass** der erste Schwellenwert (w1) gezielt bei einem Vermessen der Sensoranordnung (10) eingestellt wird,
und/oder dass der erste Schwellenwert (w1) parametrisiert wird,
und/oder dass der erste Schwellenwert (w1) in Abhängigkeit von einem Basiswert (wb) des Signals (s1, s2) in einem unbetätigten Zustand des zumindest einen Sensors (11, 12) eingestellt wird,
und/oder dass der erste Schwellenwert (w1) durch Anpassen eines Basiswerts (wb) des Signals (s1, s2) in einem unbetätigten Zustand des zumindest einen Sensors (11, 12) um einen ersten Versatzwert (Offset1) eingestellt wird.

7. Verfahren nach einem der vorhergehenden Ansprüche,
**dadurch gekennzeichnet,**
**dass** der zweite Schwellenwert (w2) gezielt bei einem Vermessen der Sensoranordnung (10) eingestellt wird,
und/oder dass der zweite Schwellenwert (w2) parametrisiert wird,
und/oder dass der zweite Schwellenwert (w2) in Abhängigkeit von einem maximalen Ansprechswert des zumindest einen Sensors (11, 12) in einem betätigten Zustand des zumindest einen Sensors (11, 12) eingestellt wird,
und/oder dass der zweite Schwellenwert (w2) durch Anpassen eines maximalen Ansprechswertes des zumindest einen Sensors (11, 12) in einem betätigten Zustand des zumindest einen Sensors (11, 12) um einen zweiten Versatzwert (Offset2) eingestellt wird.

8. Verfahren nach einem der vorhergehenden Ansprüche,
**dadurch gekennzeichnet,**
**dass** die bestimmte Betätigungsdauer (dt) kleiner als 3 s, insbesondere kleiner als 1 s eingestellt wird,
wobei insbesondere die bestimmte Betätigungsdauer (dt) in einem zeitlichen Bereich zwischen 0,1 s bis 3 s, insbesondere zwischen 0,1 s und 1 s, vorzugsweise zwischen 0,1 s und 0,3 s, eingestellt wird,
und/oder dass die bestimmte Betätigungsdauer (dt) gezielt bei einem Vermessen der Sensoranordnung (10) eingestellt wird,
und/oder dass die bestimmte Betätigungsdauer (dt) derart eingestellt wird, dass nach dem Erreichen eines maximalen Ansprechswertes des zumindest einen Sensors (11, 12) in einem betätigten Zustand des zumindest einen Sensors (11, 12) der Sensorwert sich um einen bestimmten Ansprechschwellenwert (ws) verändert,
und/oder dass die bestimmte Betätigungsdauer (dt) parametrisiert wird,
und/oder dass die bestimmte Betätigungsdauer (dt) größer oder gleich als die Hälfte einer Zeitdauer (T) beim Erfassen einer Betätigungshandlung des Benutzers (20) eingestellt wird,
wobei insbesondere die Zeitdauer (T) einem charakteristischen Signalverlauf beim Erfassen einer Betätigungshandlung des Benutzers (20) von einem Aktivieren des zumindest einen Sensors (11, 12) bis zu einem Deaktivieren des zumindest einen Sensors (11, 12) entspricht,
wobei vorzugsweise die Zeitdauer (T) von einem Eintreten des Benutzers (20) in den Detektionsbereich (B1, B2) bis zum Erreichen eines maximalen Ansprechswertes des zumindest einen Sensors (11, 12) in einem betätigten Zustand des zumindest einen Sensors (11, 12) und von dem Verlassen des maximalen Ansprechswertes des zumindest einen Sensors (11, 12) in dem betätigten Zustand des zumindest einen Sensors (11, 12) bis zum Verlassen des mindestens einen Detektionsbereiches (B1, B2) durch den Benutzer (20) vermessen wird.

9. Verfahren nach einem der vorhergehenden Ansprüche,
**dadurch gekennzeichnet,**
**dass** das Verfahren nach einem der vorhergehenden Ansprüche durch die Sensoranordnung (10) mit einem ersten Sensor (11) und einem zweiten Sensor (12) zum Erfassen einer Annäherung des Benutzers (20) durchgeführt wird,
insbesondere wobei durch den ersten Sensor (11) ein erster Detektionsbereich (B1) gebildet wird, in welchem eine Annäherung an den ersten Sensor (11) erfasst wird, und wobei durch den zweiten Sensor (12) ein zweiter Detektionsbereich (B2) gebildet wird, in welchem eine Annäherung an den zweiten Sensor (12) erfasst wird, und/oder dass das Verfahren nach einem der vorhergehenden Ansprüche für jeden Sensor (11, 12) der Sensoranordnung (10) durchgeführt wird.

10. Verfahren nach dem vorhergehenden Anspruch,
**dadurch gekennzeichnet,**
**dass** eine Betätigungshandlung nur dann erfasst wird,
wenn die Annäherung an den ersten Sensor (11) für eine bestimmte Betätigungsdauer (dt1) erfasst wird, insbesondere wenn die Signalantwort (S1) des ersten Sensors (11) für eine bestimmte Betätigungsdauer (dt1) einen ersten Schwellenwert (w1_s1) unterschreitet und/oder in einem bestimmten Fenster (w1_s1, w2_s2) verbleibt,
und die Annäherung an den zweiten Sensor (12) für eine bestimmte Betätigungsdauer (dt2) erfasst wird, insbesondere wenn die Signalantwort (S2) des zweiten Sensors (12) für eine bestimmte Betätigungsdauer (dt2) den ersten Schwellenwert (w1_s2) unterschreitet und/oder in einem bestimmten Fenster (w1_s2, w2_s2) verbleibt.

11. Verfahren nach einem der vorhergehenden Ansprüche,
**dadurch gekennzeichnet,**
**dass** beim Erfassen einer Betätigungshandlung ein Zeitpunkt (t1) einer Aktivierung des ersten Sensors (11) und ein Zeitpunkt (t2) einer Aktivierung des zweiten Sensors (12) verglichen werden,
und/oder dass eine Betätigungshandlung nur dann erfasst wird, wenn ein zeitlicher Unterschied (t2-t1) zwischen einer Aktivierung des ersten Sensors (11) und einer Aktivierung des zweiten Sensors (12) unter einer bestimmten Zeitspanne (da) liegt.

12. Verfahren nach einem der vorhergehenden Ansprüche,
**dadurch gekennzeichnet,**
**dass** beim Erfassen einer Betätigungshandlung ein maximaler Ansprechswert des ersten Sensors (11) und ein maximaler Ansprechswert des zweiten Sensors (12) verglichen werden,
und/oder dass eine Betätigungshandlung nur dann erfasst wird, wenn eine Abweichung (ds) zwischen einem maximalen Ansprechswert des ersten Sensors (11) und einem maximalen Ansprechswert des zweiten Sensors (12) maximal 50 %, insbesondere 75 %, vorzugsweise 95 % beträgt,
und/oder dass vor dem Erfassen einer Betätigungshandlung die Sensoranordnung (10) vermessen, parametrisiert und/oder konfiguriert wird,
insbesondere bei einer vorgesehenen Einbausituation,
vorzugsweise in Abhängigkeit von unterschiedlichen Betriebsbedingungen und/oder verschiedener Umweltsituationen.

13. Verfahren nach einem der vorhergehenden Ansprüche,
**dadurch gekennzeichnet,**
**dass** das Verfahren nach einem der vorhergehenden Ansprüche durch die Sensoranordnung (10) mit zumindest einem kapazitiven, optischen und/oder einem radarbasierten Sensor (11, 12) durchgeführt wird.

14. Verfahren nach einem der vorhergehenden Ansprüche,
**dadurch gekennzeichnet,**
**dass** eine Identifikationsabfrage durchgeführt wird, um eine Berechtigung des Benutzers (20) zu überprüfen,
und/oder dass eine Identifikationsabfrage eingeleitet wird, nachdem eine Betätigungshandlung durch einen ersten Sensor (11) der Sensoranordnung (10) erfasst wurde.

15. Sensoranordnung (10) zum Erfassen einer Betätigungshandlung eines Benutzers (20) für eine berührungslose Betätigung eines beweglichen Teils (101) eines Kraftfahrzeugs (100), insbesondere einer Klappe oder einer Tür, wie z. B. einer Seitentür, bspw. einer Schiebertür, des Kraftfahrzeugs (100), mit zumindest einem Sensor (11, 12) zum Erfassen einer Annäherung des Benutzers (20) und/oder eines Körperteils (21) des Benutzers (20) an die Sensoranordnung (10),
wobei durch den zumindest einen Sensor (11, 12) mindestens ein Detektionsbereich (B1, B2) gebildet wird, in welchem eine Annäherung an den zumindest einen Sensor (11, 12) erfasst wird,
und einer Steuerelektronik (13), die dafür eingerichtet ist, ein Verfahren nach einem der vorhergehenden Ansprüche durchzuführen.
